# EUROPÄISCHE PATENTSCHRIFT

(11) **EP 1 988 306 B1**
(45) Veröffentlichungstag und Bekanntmachung des Hinweises auf die Patenterteilung: **02.11.2011**
(21) Anmeldenummer: 08006912.3
(22) Anmeldetag: 07.04.2008
(51) Int. Cl.: F16F 15/123

(54) **Kupplungsscheibe**
Clutch disc
Disque de couplage

(30) Priorität: 30.04.2007 DE 102007020383
(43) Veröffentlichungstag der Anmeldung: 05.11.2008
(73) Patentinhaber: Schaeffler Technologies GmbH & Co. KG, 91074 Herzogenaurach (DE)
(72) Erfinder: Lehmann, Steffen, 76275 Ettlingen (DE); Sieber, Dimitri, 76275 Ettlingen (DE)

(56) Entgegenhaltungen:
- FR-A1- 2 691 223
- US-A- 3 428 155

## Beschreibung

Die vorliegende Erfindung betrifft eine Kupplungsscheibe nach dem Oberbegriff des Anspruchs 1.

Derartige Kupplungsscheiben sind beispielsweise aus der FR 2 691 223 A1 bekannt und umfassen Federelemente, die eine Relatiwerdrehung des Schwungrades gegenüber einer getriebefesten Nabe ermöglichen. Die Federelemente bewirken eine endliche Torsionssteifigkeit bei einer Relativdrehung. Zusätzlich können Dämpfungselemente, z. B. Reibdämpfer, in der Kupplungsscheibe angeordnet sein. Zur Begrenzung der Relativdrehung sind Anschläge vorgesehen, die bei einem Maximalwinkel einen mechanischen Anschlag bewirken. Ein derartiger mechanischer Anschlag kann insbesondere bei einem plötzlich aufgebrachten Moment ein deutlich wahrnehmbares Geräusch verursachen. Dies tritt insbesondere als so genannter Einkuppelschlag auf. Beim Anhalten eines Kraftfahrzeuges öffnet der Fahrer die Kupplung und nimmt den eingelegten Gang heraus. Die Drehzahl der Getriebeeingangswelle geht dabei auf Null zurück, der Antriebsmotor dreht mit Leerlaufdrehzahl. Nach Herausnehmen des Ganges, also nach Einlegen der Neutralstellung des Schaltgetriebes, schließt der Fahrer die Kupplung relativ schnell, um seinen Fuß zu entlasten. Dadurch wird die bisher stehende Getriebeeingangswelle mit ihrem Massenträgheitsmoment sehr schnell auf Leerlaufdrehzahl der Antriebsmaschine beschleunigt und es kommt zu einer Verspannung aller federnden oder spielbehafteten Elemente. Diese Elemente sind insbesondere eine Vordämpferverzahnung, eine Steckverzahnung von Kupplungsscheibennabe und Getriebeeingangswelle und eine Verzahnung der Synchronelemente des Getriebes. Dieses Verspannen kann zu einem störenden Geräusch, dem so genannten Einkuppelschlag, führen. Da die Verzahnung zwischen einem Dämpfernabenflansch und der Nabe das größte Spiel in diesem System aufweist ist der metallische Anschlag zwischen beiden häufig die größte Geräuschquelle.

Um dieses Geräusch zu reduzieren schlägt die DE 10 2006 008 541 beispielsweise vor, die Verzahnung mit einem gummielastischen Material zu umspritzen und dieses ggf. einzuvulkanisieren. Nachteilig an diesem Verfahren ist ein relativ hoher Fertigungsaufwand, da diese Gummiummantelung die Funktion sonst nicht weiter stören darf und daher nur im Bereich der Zähne, also in radialer Richtung bezogen auf die Verzahnung, aufgebracht werden darf. Zudem wird die Gummiummantelung mechanisch stark belastet, da diese nur eine relativ kleine Verbindungsfläche zu der jeweiligen Verzahnung aufweist. Dadurch sind die Ausfallwahrscheinlichkeit und der Abrieb relativ hoch.

Eine Aufgabe der vorliegenden Erfindung ist es, eine Kupplungsscheibe bereitzustellen, die eine Dämpfung des Einkuppelschlages bewirkt und dabei gegenüber bekannten Lösungen aus dem Stand der Technik leichter herzustellen ist und eine günstigere Standzeit im Betrieb besitzt.

Dieses Problem wird gelöst durch eine Kupplungsscheibe einer ein- und auskuppelbaren Kupplung, wobei die Kupplungsscheibe eine Nabe, die drehfest mit einer Eingangswelle eines Getriebes verbunden ist, und Reibbeläge, die bei Einkuppeln der Kupplung reibschlüssig mit dem Schwungrad einer Kraftmaschine verbunden sind, umfasst, weiter umfassend eine Dämpfungseinrichtung, die die Nabe und die Reibbeläge drehelastisch miteinander verbindet, wobei die Dämpfungseinrichtung einen nabenseitigen Dämpferflansch und einen reibbelagseitigen Dämpferkäfig umfasst und wobei eine Verzahnung an der Nabe und eine mit dieser in Eingriff befindliche Verzahnung, die mit dem Hauptdämpferflansch und dem Dämpferkäfig in Wirkverbindung steht, die Relativdrehung zwischen Nabe und Hauptdämpferflansch begrenzt, dadurch gekennzeichnet, dass die Dämpfungseinrichtung einen elastischen Ring mit einer Verzahnung, die in die Verzahnung der Nabe eingreift, umfasst, und dass der elastische Ring drehfest mit dem Dämpferkäfig verbunden ist. Mit nabenseitig ist die bezüglich des Kraftflusses auf der mittelbar oder unmittelbar mit dem Nabenflansch verbundene Seite der Dämpfungseinrichtung gemeint, mit reibbelagseitig ist entsprechend die mittelbar oder unmittelbar mit den Reibbelägen verbundene Seite der Dämpfungseinrichtung gemeint.

Die Dämpfungseinrichtung umfasst vorzugsweise eine serielle Anordnung mindestens eines Vordämpfers und mindestens eines Hauptdämpfers, die jeweils nabenseitig einen Dämpferflansch und reibbelagseitig einen Dämpferkäfig umfassen, wobei der Dämpferkäfig, mit dem der elastische Ring drehfest verbunden ist, der Vordämpferkäfig ist.

Der Vordämpfer umfasst bevorzugt mehrere parallel angeordnete Vordämpfer mit jeweils einem nabenseitigen Dämpferflansch und einem reibbelagseitigen Dämpferkäfig, der drehfest mit einem Hauptdämpferflansch verbunden ist, wobei mindestens einer der Dämpferkäfige drehfest mit dem elastischen Ring verbunden ist. Die Vordämpfer werden bei unterschiedlichen relativen Drehwinkeln zwischen Nabe und Reibbelägen beaufschlagt, so dass eine über den Drehwinkel abgestufte Federsteifigkeit erzielt wird.

Der Hauptdämpferflansch umfasst vorzugsweise eine Verzahnung, die in Eingriff mit der Verzahnung der Nabe ist, wobei die Verzahnung des elastischen Ringes so weit elastisch verformbar ist, bis die Verzahnung des Hauptdämpferflansches mit der Verzahnung der Nabe in Kontakt kommt. Die Verzahnung des elastischen Ringes wirkt sich so erst aus kurz bevor die Verzahnung des Hauptdämpferflansches mit der Verzahnung der Nabe in Kontakt kommt, die Zähne sich also berühren.

Der elastische Ring weist vorzugsweise Ausnehmungen auf, in die Zähne des Vordämpferkäfigs, mit dem der elastische Ring drehfest verbunden ist, eingreifen. Der elastische Ring ist damit formschlüssig bezüglich der Drehung mit dem Vordämpferkäfig verbunden und kann in axialer Richtung z. B. zur Montage verschoben werden.

Der elastische Ring umfasst bevorzugt einen scheibenförmigen Abschnitt, der in einem umlaufenden Absatz eines der Vordämpferkäfige angeordnet ist. Der scheibenförmige Abschnitt bewirkt eine hohe mechanische Belastbarkeit des elastischen Ringes in Umfangsrichtung. Durch die Anordnung in dem umlaufenden Absatz wird der benötigte Bauraum gegenüber Lösungen nach Stand der Technik nicht vergrößert.

Der elastische Ring umfasst vorzugsweise Anschläge als Verzahnung, wobei die Anschläge sich in axialer Richtung von dem scheibenförmigen Abschnitt erstrecken. Die Anschläge dienen der formschlüssigen Verbindung des elastischen Ringes bezüglich der Drehung mit dem Vordämpferkäfig und bilden gleichzeitig die Innenverzahnung des elastischen Ringes.

Das eingangs genannte Problem wird auch gelöst durch eine Kupplung, insbesondere Kupplung im Antriebsstrang eines Kraftfahrzeuges, mit einer erfindungsgemäßen Kupplungsscheibe.

Im Folgenden werden Ausführungsbeispiele der Erfindung anhand der beiliegenden Zeichnungen erläutert. Dabei zeigen:
- Figur 1: eine Aufsicht auf ein Ausführungsbeispiel einer erfindungsgemäßen Kupplungsscheibe;
- Figur 2: einen Schnitt gemäß I-I in Fig. 1
- Figur 3: die Einzelheit X in Fig. 2 in vergrößerter Darstellung;
- Figur 4: einen Ausbruch aus der Kupplungsscheibe gemäß Fig. 1;
- Figur 5: einen Ausbruch aus der Kupplungsscheibe gemäß Fig. 1;
- Figuren 6a und 6b: Skizzen der Eingriffsverhältnisse der Verzahnungen;
- Figuren 7, 8 und 9: Vordämpferkäfig und elastischen Ring in verschiedenen Ansichten;
- Fig. 10: eine Torsionsdämpferkennlinie der Kupplungsscheibe.

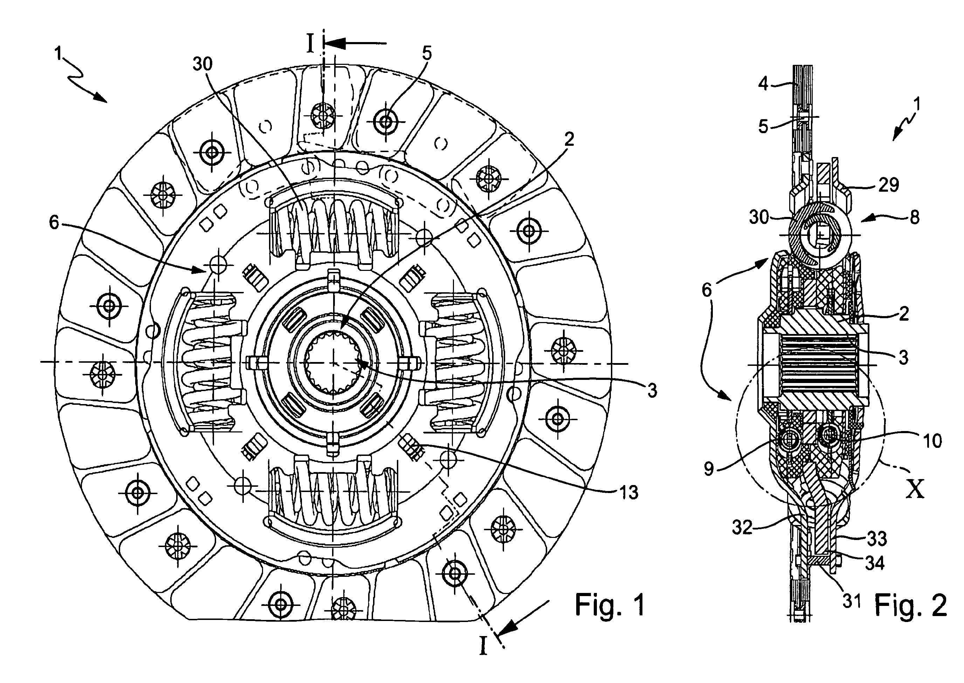

Fig. 1 zeigt eine Aufsicht auf ein Ausführungsbeispiel einer erfindungsgemäßen Kupplungsscheibe 1 und Fig. 2 einen Schnitt gemäß I-I in Fig. 1. Die Kupplungsscheibe 1 umfasst eine Nabe 2, die mit einer Innenverzahnung 3 drehfest mit einer Eingangswelle eines Getriebes verbunden wird. Die Kupplungsscheibe 1 umfasst des weiteren Reibbeläge 4, die mittels Befestigungsnieten 5 befestigt werden und so im eingekuppelten Zustand eine reibschlüssige Verbindung zwischen dem Schwungrad einer Kraftmaschine und der mit diesem drehfest verbundenen Kupplungsdruckplatte auf der einen Seite und der Kupplungsscheibe auf der anderen Seite herstellen kann. Die Reibbeläge sind mittels einer Dämpfungseinrichtung 6 drehelastisch mit der Nabe 2 verbunden. Die Drehelastizität wird durch Federelemente, die nachfolgend näher dargestellt werden, bewirkt. Parallel zu den Federelementen können in bekannter Art und Weise Reibdämpfer angeordnet werden, die eine zusätzliche Reibdämpfung in das System einbringen. Bei einer Relativdrehung der Reibbeläge 4 gegenüber der Nabe 2 wird dann auch Energie durch trockene Reibung dissipiert. Die Dämpfungseinrichtung 6 ist im Ausführungsbeispiel der Figuren 1 und 2 mehrstufig ausgeführt. Die Dämpfungseinrichtung 6 umfasst einen Vordämpfer 7 sowie einen Hauptdämpfer 8. Der Vordämpfer 7 und der Hauptdämpfer 8 sind in Serie geschaltet, sind also bezüglich der Kraftübertragung hintereinander geschaltet, so dass die Nabe 2 über den Hauptdämpfer 8 und den Vordämpfer 7 mit den Reibbelägen 4 verbunden ist. Der Vordämpfer 7 umfasst einen ersten Vordämpfer 9 sowie einen zweiten Vordämpfer 10. Der erste und zweite Vordämpfer 9, 10 sind parallel zueinander angeordnet, sind also parallel zur Kraftübertragung zwischen dem Nabe 2 und dem Hauptdämpfer 8 angeordnet.

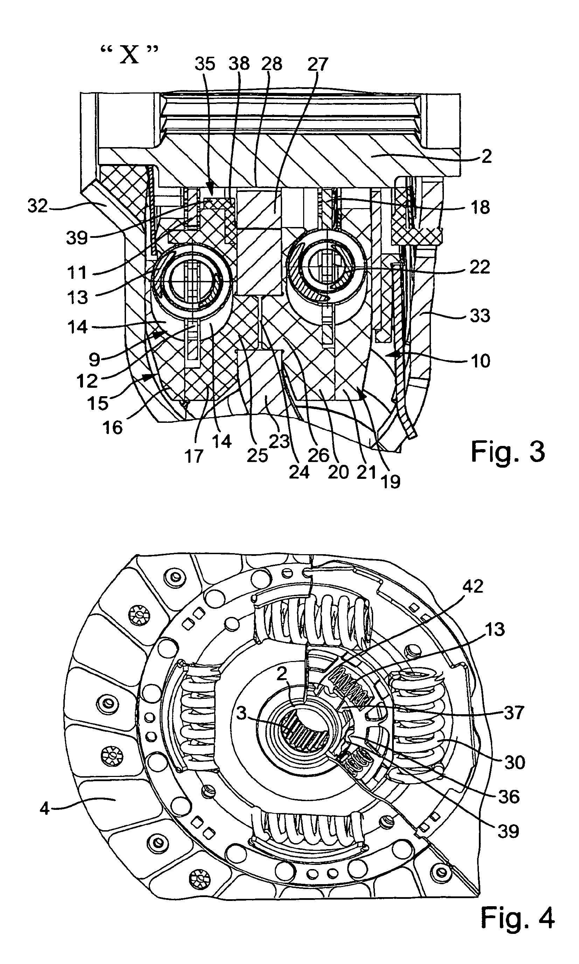

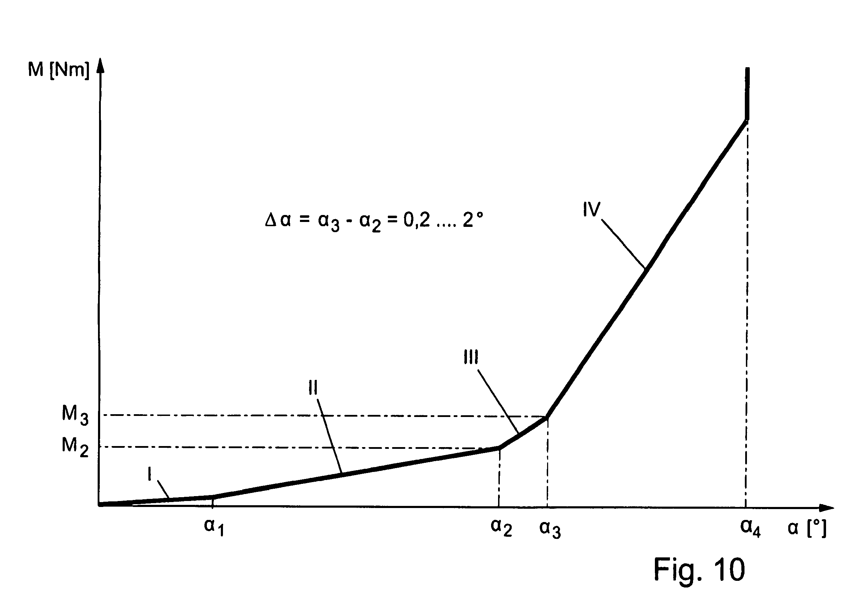

Fig. 3 zeigt die Einzelheit X in Fig. 2 in vergrößerter Darstellung. Anhand der Fig. 3 wird der Vordämpfer 7 und Baugruppen in dessen Umgebung näher beschrieben. Der erste Vordämpfer 9 umfasst einen ersten Vordämpferflansch 11, der drehfest, z. B. über eine Verzahnung, mit der Nabe 2 verbunden ist. Der erste Vordämpferflansch 11 umfasst mehrere über den Umfang verteilte Federaufnahmeöffnungen 12, in denen Schraubenfedern 13 angeordnet sind. Die Schraubenfedern 13 sind zudem in Federaufnahmeöffnungen 14 eines ersten Vordämpferkäfigs 15 aufgenommen. Der erste Vordämpferkäfig 15 ist zweiteilig ausgeführt und umfasst ein vorderes Vordämpferkäfigelement 16 und ein hinteres Vordämpferkäfigelement 17. Bei einer Relativdrehung des ersten Vordämpferflansches 11 gegenüber dem ersten Vordämpferkäfig 15 schlagen die Schraubenfedern 13 mit einem Ende an dem ersten Vordämpferflansch 11 und mit dem anderen Ende an dem ersten Vordämpferkäfig 15 an und erlauben eine Relativverdrehung beider gegeneinander gegen die Kraft der Schraubenfedern 13. Die Schraubenfedern 13 sind im vorliegenden Ausführungsbeispiel aus zwei ineinander gefügten Schraubenfedern aufgebaut. Parallel zu dem ersten Vordämpfer 9 ist der zweite Vordämpfer 10 angeordnet. Dieser ist prinzipiell identisch zu dem ersten Vordämpfer 9 aufgebaut und umfasst einen zweiten Vordämpferflansch 18 sowie einen zweiten Vordämpferkäfig 19, der wiederum aus einem vorderen Vordämpferkäfigelement 20 und einem hinteren Vordämpferkäfigelement 21 besteht, wobei zwischen dem zweiten Vordämpferflansch 18 und dem zweiten Vordämpferkäfig 19 Schraubenfedern 22 angeordnet sind. Die beiden Vordämpfer werden, wie später anhand der Fig. 10 dargestellt ist, bei unterschiedlichen Relativdrehungen wirksam. Der erste Vordämpferkäfig 15 sowie der zweite Vordämpferkäfig 19 sind jeweils drehfest mit einem Hauptdämpferflansch 23 verbunden. Dazu umfasst der Hauptdämpferflansch 23 Aufnahmeöffnungen 24, in die Verbindungsnasen 25 des ersten Vordämpferkäfigs 15 und Verbindungsnasen 26 des zweiten Vordämpferkäfigs 19 eingreifen. Der Hauptdämpferflansch 23 umfasst eine Innenverzahnung 27, die in eine Außenverzahnung 28 der Nabe 2 eingreift. Die Innenverzahnung 27 und die Außenverzahnung 28 sind so ausgelegt, dass ein relativer Verdrehwinkel α3 gemäß Fig. 10 zwischen Hauptdämpferflansch 23 und der Nabe 2 eingenommen werden kann, bis die Zähne der Innenverzahnung 27 an Zähnen der Außenverzahnung 28 anliegen.

Der Hauptdämpfer 8 umfasst neben dem Hauptdämpferflansch 23 einen Hauptdämpferkäfig 29, der ähnlich der Wirkungsweise der zuvor dargestellten Vordämpfer gegen die Kraft von Schraubenfedern 30 relativ zu dem Hauptdämpferflansch verdreht werden kann. Abstandsbolzen/Abstandsbleche 31, die ein vorderes Element 32 und ein hinteres Element 33 des Hauptdämpferkäfigs miteinander verbinden, sind in Öffnungen 34 des Hauptdämpferflansches 23 geführt und sorgen bei Anschlag an die endseitigen Enden der Öffnungen 34 für einen mechanischen Anschlag bei dem relativen Verdrehwinkel α₄ gemäß Fig. 10. Ein elastischer Ring 35 mit einer nachfolgend näher bezeichneten Innenverzahnung ist drehfest mit dem hinteren Vordämpferkäfigelement 17 des ersten Vordämpferkäfigs 15 verbunden.

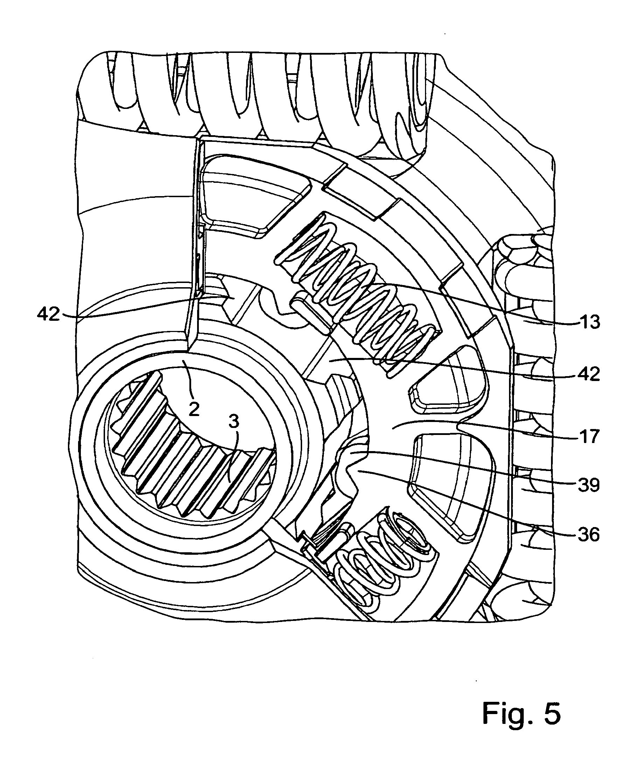

Fig. 4 und Fig. 5 zeigen jeweils einen Ausbruch aus der Kupplungsscheibe 1. Das hintere Käfigelement 17 umfasst an seiner inneren kreisförmigen Öffnung 37 mehrere über den Umfang verteilte Zähne 36. Der elastische Ring 35 umfasst einen, wie in Fig. 3 zu erkennen ist, im Wesentlichen scheibenförmigen Abschnitt 38, von dem in axialer Richtung Anschläge 39 in Richtung des vorderen Vordämpferkäfigelements 16 ragen. Die Anschläge 39 bilden eine Innenverzahnung, die in Eingriff mit der Außenverzahnung 28 ist. Das hintere Vordämpferkäfigelement 17 weist einen umlaufenden Absatz 43 auf, in dem der scheibenförmige Abschnitt 38 aufgenommen ist. Anschläge 39 ragen in axialer Richtung von dem scheibenförmigen Abschnitt ab und überdecken an der radialen Innenseite den ersten Vordämpferkäfig 15 teilweise. In Fig. 5 ist der scheibenförmige Abschnitt 38 durch das hintere Vordämpferkäfigelement 17 verdeckt, es ist einzig der Anschlag 39 zu sehen. Der Anschlag 39 umfasst eine Ausnehmung 40, die den Zahn 36 umgreift. Der Zahn 36 und die Ausnehmung 40 des Anschlags 39 stellen eine formschlüssige Verbindung her, so dass das hintere Vordämpferkäfigelement 17 drehfest mit dem elastischen Ring 35 verbunden ist. Die Anschläge 39 sind so angeordnet, dass diese die Zähne 41 der Innenverzahnung 27 des Hauptdämpferflansches 23 jeweils in Umfangsrichtung beiderseits überragen. Dies ist in Fig. 5 anhand einem der Zähne 41 und einem der Anschläge 39 dargestellt. Die Anschläge 39 sind ballig ausgeführt und überdecken einen Umfangsbereich, der größer ist als der Umfangsbereich, den die Zähne 41 überdecken. Bevor also die Zähne 41 der Innenverzahnung 27 an die Zähne 42 der Außenverzahnung 28 anstoßen, stoßen die Anschläge 39 an die Zähne 42 der Außenverzahnung 28 an. Der elastische Ring 35 und insbesondere die Anschläge 39 des elastischen Rings 35 sind aus einem Gummimaterial, aus einem thermoplastischen Elastomer, einem Silikon-Kautschuk oder einem ähnlichen Werkstoff gefertigt, so dass das Anschlagen des Anschlags 39 an einen Zahn 42 gedämpft ist.

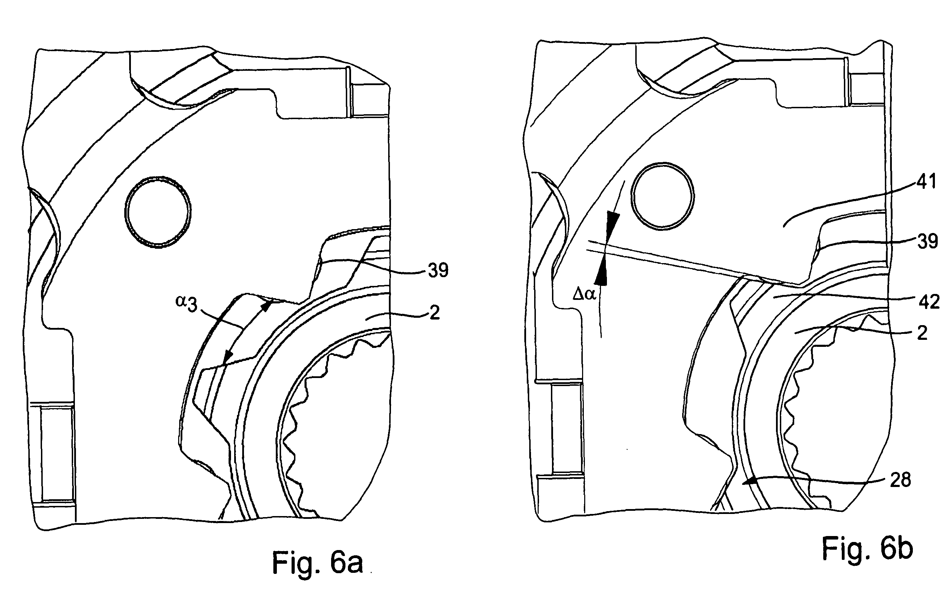

Fig. 6a und 6b zeigen die Eingriffsverhältnisse der Verzahnungen 27 und 28. Dargestellt ist die Nabe 2 mit der Verzahnung 28 sowie der Hauptdämpferflansch 23 mit der Verzahnung 27 und der elastische Ring 35 mit den Anschlägen 39. In Fig. 6a ist die Nulllage dargestellt, die Verzahnung 27, 28 hat zugseitig das Spiel α₃, schubseitig kann ein anderes Spiel wirken. Der Elastomeranschlag des elastischen Ringes überragt die Innenverzahnung 27 des Hauptdämpferflansches 23 um ein kleines Maß. In Fig. 6b ist die Lage bei Winkelposition α₂ dargestellt, ab der die Anschläge 39 durch die Verzahnung 28 der Nabe 2 komprimiert werden. Nach Überwinden des Winkels Δα wird die Winkelposition α₃ erreicht, und der Hauptdämpfer 8 beginnt zu wirken, während der Vordämpfer 7 abgeschaltet ist.

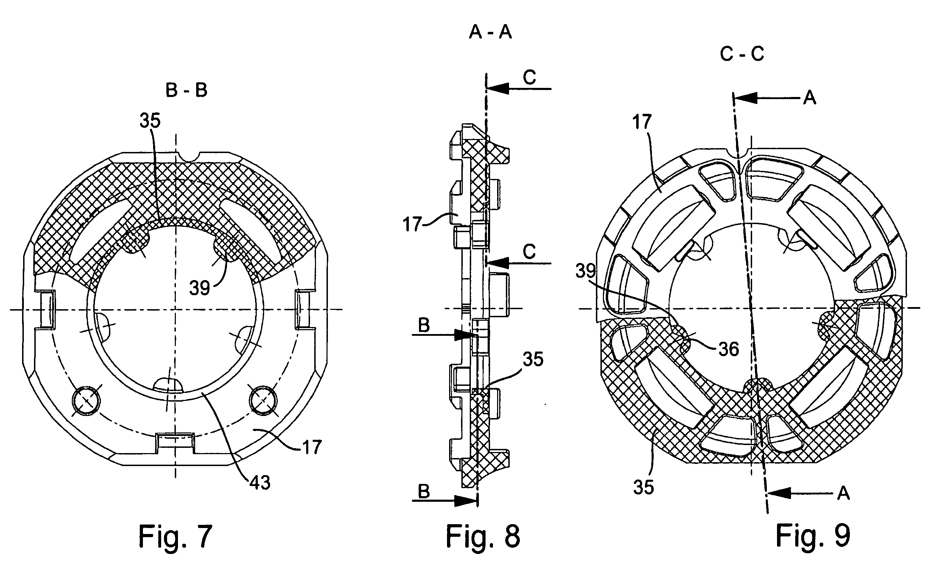

Fig. 7 bis 9 zeigen das hintere Vordämpferkäfigelement 17 mit dem umspritzten (wahlweise auch eingepressten oder eingeklebten) elastischen Ring 35. In Fig. 7 ist im oberen Bereich der Schnitt C-C in Fig. 8 dargestellt, in Fig. 9 ist im unteren Bereich der Schnitt B-B gemäß Fig. 8 dargestellt. Der elastischen Ring 35 bildet einen umlaufenden Ring mit lokal auf den Zähnen des Vordämpferkäfigs aufgebrachten balligen Bereichen, durch deren Kompression die eigentliche Federwirkung hervorgerufen wird. In Fig. 9 sind die Zähne 36 des hinteren Vordämpferkäfigelementes 17 zu erkennen, die zur formschlüssigen Verbindung in korrespondierende Ausnehmungen 40 der Anschläge 39 des elastischen Ringes 35 eingreifen.

Fig. 10 zeigt eine Torsionsdämpferkennlinie des zuvor dargestellten Ausführungsbeispiels einer erfindungsgemäßen Kupplungsscheibe 1. Dargestellt ist das zwischen Nabe 2 und Reibbelägen 4 aufzubringende Moment über den relativen Verdrehwinkel α beider zueinander. Bei einem relativen Verdrehwinkel α=0 ist kein Moment aufzubringen, wird der relative Verdrehwinkel α vergrößert, so erfolgt die Relativverdrehung zunächst im Bereich I der Kennlinie gegen die Federkraft des ersten Vordämpfers 9 bis zum Erreichen eines relativen Verdrehwinkels α =α₁. Die Steigung dieser Kurve entspricht der Federkonstanten Kϕ der Dämpfungseinrichtung bei Torsion um den Winkel α und beträgt M₁/α₁. Beginnend mit dem relativen Verdrehwinkel α₁ tritt im Bereich II nun auch der zweite Vordämpfer 10 in Aktion, so dass sich die Federkonstante erhöht. Die Federkonstante Kϕ in diesem Bereich beträgt (M₂M₁)/(α₂-α₁) und ist größer als die Federkonstante Kϕ im Bereich zwischen α=0° und α=α₁. Mit Erreichen des Relativwinkels α₂ schlagen die Anschläge 39 an den Zähnen 42 der Außenverzahnung 28 an. Dies bewirkt eine deutliche Erhöhung der Federsteifigkeit. Der relative Drehwinkel Δα=α₃-α₂ beträgt etwa 0,2 bis 2°. In Fig. 10 ist dieser mit III gekennzeichnete Abschnitt der Torsionsdämpferkennlinie als Gerade dargestellt, durch die Verwendung eines Gummimaterials wird die Kennlinie hier in der Praxis von einer Geraden abweichen. Ziel ist die Erhöhung der Steifigkeit über einen relativ geringen Bereich, bevor bei einem Winkel α=α₃ die Zähne 41 der Innenverzahnung 27 an Zähne 42 der Außenverzahnung 28 anschlagen. Bei einem Winkel α=α₄ schlagen schließlich die Abstandsbolzen/Abstandsbleche 31 in den Öffnungen 34 an, so dass keine weitere Relativverdrehung mehr möglich ist und die Federsteifigkeit idealisiert betrachtet gegen unendlich geht.

### Bezupszeichenliste

- 1: Kupplungsscheibe
- 2: Nabe
- 3: Innenverzahnung
- 4: Reibbeläge
- 5: Befestigungsniet
- 6: Dämpfungseinrichtung
- 7: Vordämpfer
- 8: Hauptdämpfer
- 9: Erster Vordämpfer
- 10: Zweiter Vordämpfer
- 11: Erster Vordämpferflansch
- 12: Federaufnahmeöffnung
- 13: Schraubenfeder
- 14: Federaufnahmeöffnung
- 15: Erster Vordämpferkäfig
- 16: Vorderes Vordämpferkäfigelement
- 17: Hinteres Vordämpferkäfigelement
- 18: Zweiter Vordämpferflansch
- 19: Zweiter Vordämpferkäfig
- 20: Vorderes Vordämpferkäfigelement
- 21: Hinteres Vordämpferkäfigelement
- 22: Schraubenfeder
- 23: Hauptdämpferflansch
- 24: Aufnahmeöffnung
- 25: Verbindungsnase
- 26: Verbindungsnase
- 27: Innenverzahnung
- 28: Außenverzahnung
- 29: Hauptdämpferkäfig
- 30: Schraubenfeder
- 31: Abstandsbolzen/Abstandsblech
- 32: Vorderes Element Hauptdämpferkäfig
- 33: Hinteres Element Hauptdämpferkäfig
- 34: Öffnungen
- 35: Elastischer Ring
- 36: Zahn
- 37: Innere Öffnung
- 38: Scheibenförmiger Abschnitt
- 39: Anschlag
- 40: Ausnehmung
- 41: Zahn der Innenverzahnung 27
- 42: Zahn der Außenverzahnung 28
- 43: umlaufender Absatz

## Patentansprüche

1. Kupplungsscheibe (1) einer ein- und auskuppelbaren Kupplung, wobei die Kupplungsscheibe (1) eine Nabe (2), die drehfest mit einer Eingangswelle eines Getriebes verbunden ist, und Reibbeläge (4), die bei Einkuppeln der Kupplung reibschlüssig mit dem Schwungrad einer Kraftmaschine verbunden sind, umfasst, weiter umfassend eine Dämpfungseinrichtung (6, 7, 9, 10), die die Nabe (2) und die Reibbeläge (4) drehelastisch miteinander verbindet, wobei die Dämpfungseinrichtung (6, 7, 8, 9, 10) einen nabenseitigen Dämpferflansch (11, 18, 23) und einen reibbelagseitigen Dämpferkäfig (15, 19) umfasst und wobei eine Verzahnung (28, 42) an der Nabe (2) und eine mit dieser in Eingriff befindliche Verzahnung (27, 41), die mit dem Hauptdämpferflansch (23) und dem Dämpferkäfig (15, 19) in Wirkverbindung steht, die Relativdrehung zwischen Nabe (2) und Hauptdämpferflansch (23) begrenzt, **dadurch gekennzeichnet, dass** die Dämpfungseinrichtung (6, 7, 9, 10) einen elastischen Ring (35) mit einer Verzahnung (39), die in die Verzahnung (28) der Nabe (2) eingreift, umfasst, und dass der elastische Ring (35) drehfest mit dem Dämpferkäfig (15, 19) verbunden ist.

2. Kupplungsscheibe nach Anspruch 1, **dadurch gekennzeichnet, dass** die Dämpfungseinrichtung (6, 7, 9, 10) eine serielle Anordnung mindesten eines Vordämpfers (7) und mindestens eines Hauptdämpfers (8) umfasst, die jeweils nabenseitig einen Dämpferflansch und reibbelagseitig einen Dämpferkäfig umfassen, wobei der Dämpferkäfig, der mit dem der elastische Ring drehfest verbunden ist, der Vordämpferkäfig ist.

3. Kupplungsscheibe nach Anspruch 2, **dadurch gekennzeichnet, dass** der Vordämpfer (7) mehrere parallel angeordnete Vordämpfer (9, 10) mit jeweils einem nabenseitigen Dämpferflansch und einem reibbelagseitigen Dämpferkäfig, der drehfest mit einem Hauptdämpferflansch (23) verbunden ist, umfasst und mindestens einer der Dämpferkäfige drehfest mit dem elastischen Ring (35) verbunden ist.

4. Kupplungsscheibe nach Anspruch 3, **dadurch gekennzeichnet, dass** der Hauptdämpferflansch (23) eine Verzahnung (27) umfasst, die in Eingriff mit der Verzahnung (28) der Nabe (2) ist, und die Verzahnung des elastischen Ringes (35) so weit elastisch verformbar ist, bis die Verzahnung (27) des Hauptdämpferflansches (23) mit der Verzahnung (28) der Nabe (2) in Kontakt kommt.

5. Kupplungsscheibe nach Anspruch 4, **dadurch gekennzeichnet, dass** der elastische Ring (35) Ausnehmungen (40) aufweist, in die Zähne (36) des Vordämpferkäfigs (15), mit dem der elastische Ring (35) drehfest verbunden ist, eingreifen.

6. Kupplungsscheibe nach Anspruch 5, **dadurch gekennzeichnet, dass** der elastische Ring (35) einen scheibenförmigen Abschnitt (38) umfasst, der in einem umlaufenden Absatz (43) eines der Vordämpferkäfige (15) angeordnet ist.

7. Kupplungsscheibe nach Anspruch 6, **dadurch gekennzeichnet, dass** der elastische Ring (35) Anschläge (39) als Verzahnung umfasst und die Anschläge (39) sich in axialer Richtung von dem scheibenförmigen (38) Abschnitt erstrecken.

8. Kupplung, insbesondere Kupplung im Antriebsstrang eines Kraftfahrzeuges, mit einer Kupplungsscheibe nach einem der vorhergehenden Ansprüche.

## Claims

1. Clutch disc (1) of an engagable and disengagable clutch, the clutch disc (1) comprising a hub (2), which is connected fixedly in terms of rotation to an input shaft of a transmission, and friction linings (4), which, when the clutch is engaged, are connected frictionally to the flywheel of an engine, further comprising a damping device (6, 7, 9, 10) which connects the hub (2) and the friction linings (4) to one another in a torsionally flexible manner, the damping device (6, 7, 8, 9, 10) comprising a hub-side damper flange (11, 18, 23) and a friction lining-side damper cage (15, 19), and a toothing (28, 42) on the hub (2) and a toothing (27, 41), which is in engagement with this and is operatively connected to the main damper flange (23) and to the damper cage (15, 19), limiting the relative rotation between the hub (2) and main damper flange (23), **characterized in that** the damping device (6, 7, 9, 10) comprises an elastic ring (35) with a toothing (39) which engages into the toothing (28) of the hub (2), and **in that** the elastic ring (35) is connected fixedly in terms of rotation to the damper cage (15, 19).

2. Clutch disc according to Claim 1, **characterized in that** the damping device (6, 7, 9, 10) comprises a series arrangement of at least one predamper (7) and of at least one main damper (8), which in each case comprise a damper flange on the hub side and a damper cage on the friction-lining side, the damper cage, to which the elastic ring is connected fixedly in terms of rotation, being the predamper cage.

3. Clutch disc according to Claim 2, **characterized in that** the predamper (7) comprises a plurality of parallel-arranged predampers (9, 10), each with a hub-side damper flange and with a friction-lining-side damper cage, which is connected fixedly in terms of rotation to a main damper flange (23), and at least one of the damper cages is connected fixedly in terms of rotation to the elastic ring (35).

4. Clutch disc according to Claim 3, **characterized in that** the main damper flange (23) comprises a toothing (27) which is in engagement with the toothing (28) of the hub (2), and the toothing of the elastic ring (35) is elastically deformable until the toothing (27) of the main damper flange (23) comes into contact with the toothing (28) of the hub (2).

5. Clutch disc according to Claim 4, **characterized in that** the elastic ring (35) has recesses (40) into which engage teeth (36) of the predamper cage (15) to which the elastic ring (35) is connected fixedly in terms of rotation.

6. Clutch disc according to Claim 5, **characterized in that** the elastic ring (35) comprises a disc-shaped portion (38) which is arranged in a peripheral step (43) of one of the predamper cages (15).

7. Clutch disc according to Claim 6, **characterized in that** the elastic ring (35) comprises stops (39) as toothing, and the stops (39) extend in the axial direction from the disc-shaped portion (38).

8. Clutch, in particular clutch in the drive train of a motor vehicle, with a clutch disc according to one of the preceding claims.

## Revendications

1. Disque d'embrayage (1) d'un embrayage pouvant être embrayé et débrayé, le disque d'embrayage (1) comprenant un moyeu (2) qui est connecté de manière solidaire en rotation à un arbre d'entrée d'une transmission, et des garnitures de friction (4) qui sont connectées par engagement par friction lors de l'embrayage de l'embrayage à la roue volante d'une machine motrice, comprenant en outre un dispositif d'amortissement (6, 7, 9, 10), qui relie de manière élastique en rotation les uns aux autres le moyeu (2) et les garnitures de friction (4), le dispositif d'amortissement (6, 7, 8, 9, 10) comprenant une bride d'amortisseur (11, 18, 23) du côté du moyeu et une cage d'amortisseur (15, 19) du côté de la garniture de friction, et dans lequel une denture (28, 42) sur le moyeu (2) et une denture (27, 41) en prise avec celle-ci, qui est en liaison fonctionnelle avec la bride d'amortisseur principale (23) et la cage d'amortisseur (15, 19), limitent la rotation relative entre le moyeu (2) et la bride d'amortisseur principale (23), **caractérisé en ce que** le dispositif d'amortissement (6, 7, 9, 10) comprend une bague élastique (35) avec une denture (39) qui vient en prise dans la denture (28) du moyeu (2), et **en ce que** la bague élastique (35) est connectée de manière solidaire en rotation à la cage d'amortisseur (15, 19).

2. Disque d'embrayage selon la revendication 1, **caractérisé en ce que** le dispositif d'amortisseur (6, 7, 9, 10) comprend un agencement en série d'au moins un pré-amortisseur (7) et d'au moins un amortisseur principal (8), qui comprennent à chaque fois du côté du moyeu une bride d'amortisseur et du côté de la garniture de friction une cage d'amortisseur, la cage d'amortisseur, avec laquelle la bague élastique est connectée de manière solidaire en rotation, étant la cage du pré-amortisseur.

3. Disque d'embrayage selon la revendication 2, **caractérisé en ce que** le pré-amortisseur (7) comprend plusieurs pré-amortisseurs (9, 10) disposés en parallèle, avec à chaque fois une bride d'amortisseur du côté du moyeu et une cage d'amortisseur du côté de la garniture de friction, qui est connectée de manière solidaire en rotation à la bride d'amortisseur principale (23), et au moins l'une des cages d'amortisseurs est connectée de manière solidaire en rotation à la bague élastique (35).

4. Disque d'embrayage selon la revendication 3, **caractérisé en ce que** la bride d'amortisseur principale (23) comprend une denture (27) qui est en prise avec la denture (28) du moyeu (2), et la denture de la bague élastique (35) peut être déformée élastiquement dans une mesure telle que la denture (27) de la bride d'amortisseur principale (23) vienne en contact avec la denture (28) du moyeu (2).

5. Disque d'embrayage selon la revendication 4, **caractérisé en ce que** la bague élastique (35) présente des évidements (40) dans lesquels s'engagent des dents (36) de la cage de pré-amortisseur (15), à laquelle la bague élastique (35) est connectée de manière solidaire en rotation.

6. Disque d'embrayage selon la revendication 5, **caractérisé en ce que** la bague élastique (35) comprend une portion (38) en forme de disque qui est disposée dans un épaulement périphérique (43) de l'une des cages de pré-amortisseur (15).

7. Disque d'embrayage selon la revendication 6, **caractérisé en ce que** la bague élastique (35) comprend des butées (39) en tant que denture, et les butées (39) s'étendent dans la direction axiale depuis la portion (38) en forme de disque.

8. Embrayage, notamment embrayage dans la chaîne cinématique d'un véhicule automobile, comprenant un disque d'embrayage selon l'une quelconque des revendications précédentes.
